# NEUE EUROPÄISCHE PATENTSCHRIFT

(11) **EP 3 027 928 B2**
(45) Veröffentlichungstag und Bekanntmachung des Hinweises auf die Entscheidung über den Einspruch: **24.01.2024**
(45) Hinweis auf die Patenterteilung: 01.11.2017
(21) Anmeldenummer: 14741884.2
(22) Anmeldetag: 22.07.2014
(51) Int. Cl.: F16D 65/18, F16J 15/32

(54) **SCHEIBENBREMSE FÜR EIN KRAFTFAHRZEUG MIT FÜR ELEKTRONISCHE PARKBREMSE AUSGELEGTER DICHTUNGSANORDNUNG**
DISC BRAKE FOR A MOTOR VEHICLE, HAVING A SEALING ARRANGEMENT DESIGNED FOR AN ELECTRONIC PARKING BRAKE
FREIN À DISQUE POUR UN VÉHICULE AUTOMOBILE POURVU D'UN DISPOSITIF D'ÉTANCHÉITÉ CONÇU POUR FREIN DE STATIONNEMENT ÉLECTRONIQUE

(30) Priorität: 01.08.2013 DE 102013012823
(43) Veröffentlichungstag der Anmeldung: 08.06.2016
(73) Patentinhaber: ZF Active Safety GmbH, 56070 Koblenz (DE)
(72) Erfinder: STAHL, Peter, 53474 Bad Neuenahr - Ahrweiler (DE); KUHNERT, Boris, 56112 Lahnstein (DE); DAMRAU, Christian, 56348 Dahlheim (DE); THARR, Christian, 56154 Boppard (DE); PODZUWEIT, Dietrich, 56332 Dieblich (DE); HEINEMANN, Maria, 53489 Bad Bodendorf (DE); BRANDT, Martin, 56323 Waldesch (DE); DANG, Nong, 56072 Koblenz (DE); SCHOG, Michael, 56753 Mertloch (DE)
(74) Vertreter: ZF Friedrichshafen AG
(86) Internationale Anmeldenummer: PCT/EP2014/065698
(87) Internationale Veröffentlichungsnummer: WO 2015/014664

(56) Entgegenhaltungen:
- EP-A1- 0 396 231
- WO-A1-98/19075
- WO-A1-2012/016612
- DE-A1- 1 655 485
- DE-A1- 4 202 927
- DE-A1- 10 215 935
- DE-A1- 19 644 552
- DE-A1-102010 006 207
- DE-T2- 69 204 062
- US-A1- 2013 116 904
- Bremssattel Gehäuse Zeichnung 11-.357-1-9997:8.:9 mit Veröffentlichung zum 29-07-1987
- SAE-Paper No.2002 -01-0927
- Weitere genannte Dokumente sind ggf. der Beschwerdedate zu entnehmen

## Beschreibung

Die vorliegende Erfindung betrifft eine Scheibenbremse für ein Kraftfahrzeug wobei die Scheibenbremse ein Gehäuse, eine relativ zum Gehäuse drehbare Bremsscheibe, wenigstens einen Reibbelag, sowie wenigstens eine Betätigungseinrichtung umfasst, die dazu ausgebildet ist, eine Relativbewegung zwischen der Bremsscheibe und dem Reibbelag zu bewirken, so dass der Reibbelag in Anlage mit der Bremsscheibe bringbar ist, wobei die Betätigungseinrichtung wenigstens einen entlang einer Kolbenlängsachse verlagerbaren Betätigungskolben aufweist, der in dem Gehäuse über eine Dichtungsanordnung mit einem Dichtring hydraulisch dichtend verlagerbar geführt ist, wobei der Betätigungskolben in dem Gehäuse sowohl durch hydraulische Druckbeaufschlagung einer in dem Gehäuse ausgebildeten Hydraulikkammer als auch über ein mechanisches Stellglied verlagerbar ist, wobei der Dichtring in einer in dem Gehäuse ausgebildeten Ringnut aufgenommen ist.

Derartige Scheibenbremsen sind aus dem Stand der Technik bekannt.

Bei derartigen Scheibenbremsen kann der Betätigungskolben sowohl hydraulisch im Rahmen einer normalen Betriebsbremsung als auch mechanisch über eine Stellgliedanordnung zur Aktivierung einer Parkbremsfunktion verlagert werden. In beiden Verlagerungsfällen muss der Kolben innerhalb des Gehäuses dichtend geführt werden, um ein Austreten von Hydraulikfluid aus der Hydraulikkammer zu verhindern. Hierzu ist üblicherweise in einer im Gehäuse ausgebildeten Ringnut ein Dichtring vorgesehen, der den verlagerbar geführten Kolben dichtend führt. In diesem Zusammenhang wurde erkannt, dass herkömmliche Dichtungsanordnungen, bei denen einfach ein Dichtring in eine entsprechende Ringnut eingelegt ist, im Wechselspiel zwischen Betriebsbremsungen und zwischenzeitlich durchgeführten Aktivierungen der Parkbremsfunktion zu erheblichen Schwierigkeiten führen können. Dies liegt daran, dass - sieht man von Maßnahmen zum Ausgleich eines Verschleißes an den Bremsbelägen einmal ab - im Rahmen normaler Betriebsbremsungen der erfolgte Kolbenhub des Betätigungskolbens nur relativ kleine Distanzen umfasst, wobei bei derartigen Betriebsbremsungen der Dichtring aufgrund der Haftreibung auf der Außenumfangsfläche des Kolbens an dieser haftet. Mit anderen Worten rutscht der Kolben im Rahmen normaler Betriebsbremsungen nicht durch den Dichtring hindurch. Stattdessen verformt sich der Dichtring aufgrund der hydraulisch bedingten Kolbenverlagerung nur elastisch. Wird der Hydraulikdruck in der Hydraulikkammer bei Beendigung der Bremsung freigegeben, so bewegt sich der Betätigungskolben aufgrund der im Wesentlichen rein elastischen Deformation des Dichtrings während der Bremsung und der darauf folgenden elastischen Entspannung wieder in seinen Ausgangszustand zurück, wie beispielsweise in den Dokumenten DE 30 24 299 A1, US 4,156,532 und JP H11-280 805 A beschrieben. Auf diese Weise können Restschleifmomente nach einer Betriebsbremsung zwischen der Bremsscheibe und den angedrückten Bremsbelägen wirkungsvoll unterbunden werden. Die Rückstellbewegung des elastisch deformierten Dichtrings wird insbesondere auch durch den auf der Hydraulikkammer zugewandten Seite des Dichtrings anliegenden Hydraulikdruck unterstützt. Dieser Hydraulikdruck hat bei einer Betriebsbremsung wesentlichen Einfluss auf das elastische Deformationsverhalten des Dichtrings und dessen Entspannung und Rückdeformation bei Freigabe des Hydraulikdrucks.

Wird nun aber die Parkbremse über das mechanische Stellglied aktiviert, so kommt es gleichsam zu einer Verlagerung des Betätigungskolbens, allerdings nicht durch Aufbringen des Hydraulikdrucks in der Drucckammer, sondern vielmehr durch Betätigung des mechanischen Stellglieds. Bei einer derartigen Aktivierung der Parkbremse fällt also die hydraulische Verformungsunterstützung mangels in der Hydraulikkammer anliegenden Hydraulikdrucks weg, sodass sich auch das Verformungsverhalten des Dichtrings ändert. Der Dichtring ist hydraulikkammerseitig nicht mehr mit Hydraulikdruck beaufschlagt und wird dementsprechend nicht hinreichend stark deformiert und an die Außenumfangsfläche des Betätigungskolbens angedrückt, um die Haftreibung aufrechtzuerhalten, wie dies bei einer normalen Betriebsbremsung der Fall ist. Demnach besteht bei einer Aktivierung der Parkbremse über das Stellglied das Risiko, dass bei der Bewegung des Betätigungskolbens dieser die Haftreibung zwischen Betätigungskolben und Dichtring überwindet und schließlich um eine bestimmte Strecke durch den Dichtring hindurchrutscht. Wird später die Parkbremse wieder gelöst, so stellt aber aufgrund dieses Hindurchrutschens der Dichtring die während der Betriebsbremsung üblicherweise wirkende elastische Rückstellbewegung nicht mehr bereit. Dies bedeutet, dass der Betätigungskolben weitgehend in seiner Stellung verharrt, die er während des aktivierten Zustands der Parkbremse eingenommen hatte. In der Folge kommt es nach dem eigentlichen Lösen der Parkbremse zu zum Teil erheblichen Restschleifmomenten, die Nachteile mit sich bringen wie Belagverschleiß, erhöhten Kraftstoffverbrauch, Geräuschentwicklung etc.

Um diesem Problem zu begegnen, sieht der Stand der Technik gemäß WO 2007/125086 A1 vor, die Ringnut mit einem schräg verlaufenden Nutgrund zu versehen, bei dem sich die Tiefe der Nut quer zur Kolbenlängsachse in Rückhubrichtung kontinuierlich vergrößert. Damit soll in Rückstellrichtung eine Kraftkomponente erreicht werden, die ähnlich einer Hangabtriebskraft wirkt und den Dichtring von der zuspannseitigen Flanke der Nut wegbewegt.

Auch das Dokument WO 2012/016612 A1 begegnet dem oben geschilderten Problem, das sich aus dem Wechselspiel zwischen Betriebsbremsung und Aktivierung der Parkbremse ergibt. Bei dieser Lösung wird allerdings nicht durch Gestaltung der Ringnut, sondern vielmehr durch gezielten Einsatz einer Schlupfregelanlage dem Entstehen von Restschleifmomenten nach der Aktivierung der Parkbremse entgegengewirkt.

Weiterer Stand der Technik ist aus dem Dokument DE 16 55 485 A bekannt.

Es ist eine Aufgabe der vorliegenden Erfindung, eine Scheibenbremse der eingangs bezeichneten Art bereitzustellen, bei der auch bei einer Aktivierung der Parkbremse über das Stellglied und anschließender Freigabe derselben mit einfachen und kostengünstigen Mitteln ein Lüftspiel erhalten werden kann.

Diese Aufgabe wird durch die Merkmale des Patentanspruchs 1 gelöst.

Durch die erfindungsgemäße Gestaltung der Ringnut mit einem im Wesentlichen parallel zur Kolbenlängsachse verlaufenden Nutgrund lässt sich ein gegenüber herkömmlichen Bremsen übliches Verhalten der Dichtung zwischen Gehäuse und Betätigungskolben erreichen. Anders als beim vorstehend genannten Stand der Technik kommt es nicht zu unerwünschten Reibungserhöhungen aufgrund des geneigten Nutgrundes. Allerdings ist zwischen der ersten Nutwand und dem Nutgrund der bezeichnete gerundete bzw. angeschrägte Übergangsbereich vorgesehen. Dieser bewirkt, dass bei einer Verlagerung des Betätigungskolbens über das mechanische Stellglied der Dichtring in den Übergangsbereich gezogen wird und dadurch sozusagen auf die Außenumfangsfläche des Betätigungskolbens gedrückt wird, wodurch die Haftreibung zwischen Dichtring und Außenumfangsfläche des Betätigungskolbens erhöht wird und ein Durchrutschen des Betätigungskolbens durch den Dichtring wirkungsvoll reduziert werden kann. Ferner kann dadurch selbst bei einem Hindurchrutschen des Betätigungskolbens durch den Dichtring in Folge einer Aktivierung der Parkbremsfunktion eine schnelle Rückgewinnung der ursprünglichen Dichtringposition auf dem Betätigungskolben zum Erzielen der gewünschten elastischen Rückstellbewegung während einer darauffolgenden Betriebsbremsung sichergestellt werden. Bei der Erfindung ist der Nutgrund über seinen axialen Verlauf im Wesentlichen parallel zur Kolbenlängsachse ausgebildet und nicht wie beim Stand der Technik angeschrägt, wodurch das Verhalten des Dichtrings während der üblichen Betriebsbremsung unter Hydraulikdruck im Wesentlichen unverändert gegenüber herkömmlichen Bremssystemen bleibt. Es kommt also bei einer üblichen Betriebsbremsung nicht zu einem ungewohnt starken Anpressen des Dichtrings an die Außenumfangsfläche des Betätigungskolbens, wie dies beim Stand der Technik mit dem angeschrägten Nutgrund der Fall sein kann.

Eine Weiterbildung der Erfindung sieht vor, dass der Übergangsbereich in einem achsenthaltenden Schnitt betrachtet ein im Wesentlichen kreisbogenförmiges Profil aufweist. Dabei kann erfindungsgemäß vorgesehen sein, dass der Radius des kreisbogenförmigen Profils im Bereich zwischen 0,5 und 2 mm liegt. Durch die Wahl eines kreisbogenförmigen Profils, insbesondere mit den vorstehend angegebenen Radien, lassen sich kantenfrei harmonische Übergänge erreichen, die keine negativen Auswirkungen auf die Lebensdauer des Dichtrings haben.

Ferner kann erfindungsgemäß vorgesehen sein, dass der Übergangsbereich als schräg verlaufende Übergangsfläche ausgebildet ist, die sich relativ zum Nutgrund in einem Winkel zwischen 35 und 55° erstreckt. Auch mit einer derartigen Anordnung lassen sich die eingangs erläuterten positiven Effekte wirksam erreichen.

Eine Weiterbildung der Erfindung sieht vor, dass die erste Nutwand oder/und die zweite Nutwand radial innerhalb des Übergangsbereichs im Wesentlichen senkrecht zur Kolbenlängsachse verläuft. Dabei kann vorgesehen sein, dass die zweite Nutwand in ihrem radial inneren Bereich in einem Flächenabschnitt ausläuft, der von dem senkrechten Verlauf zu Kolbenlängsachse abweicht. Insbesondere sieht die vorliegende Erfindung in diesem Zusammenhang vor, dass der Flächenabschnitt von einer Schräge gebildet ist, die mit der zweiten Nutwand einen Winkel zwischen 15° und 45° einschließt. Dadurch entsteht in der Ringnut ein Volumenbereich, in den von der Hydraulikkammer ein Hydraulikfluid eintreten kann und in dem zur hydraulischen Deformationsunterstützung sich ein hinreichendes Fluidpolster aufbauen kann. Dies wird insbesondere dadurch erleichtert, dass sich der Flächenabschnitt über einen Bereich von 30 % bis 70 % der radialen Höhe der Ringnut erstreckt.

Ferner kann erfindungsgemäß vorgesehen sein, dass zwischen dem Nutgrund und der zweiten Nutwand eine Übergangsfläche vorgesehen ist. In diesem Zusammenhang ist es möglich, dass die Übergangsfläche als Schräge ausgebildet ist, die in einem Winkel von 30° bis 50° relativ zum Nutgrund verläuft. Auch diese Maßnahme unterstützt ein gewünschtes Verhalten des Dichtelements innerhalb der Ringnut, da durch diese Übergangsfläche das Dichtelement in gewissem Abstand von der zweiten Nutwand gehalten werden kann, sodass sich auf der der zweiten Nutwand zugewandten Seite des Dichtrings ein hinreichendes Fluidpolster zum Aufbau von deformationsunterstützendem Hydraulikdruck ausbilden kann.

Grundsätzlich kann erfindungsgemäß vorgesehen sein, dass der Dichtring mit einem größeren Außendurchmesser ausgebildet ist, als der Innendurchmesser der Ringnut, wobei vorzugsweise der Außendurchmesser des Dichtrings mit einem radialen Übermaß von 0,5 - 1,2 mm, vorzugsweise von 0,8 mm, gegenüber dem Innendurchmesser der Ringnut ausgebildet ist. Das Übermaß kann je nach Ausgestaltung und Dimensionierung der Scheibenbremse variieren.

Um das gewünschte Verhalten der Scheibenbremse während Betriebsbremsvorgängen aber auch während einer Aktivierung der Parkbremse gewährleisten zu können, sieht die Erfindung vor, dass das Volumen des von der Ringnut umschlossenen Hohlraums, vorzugsweise um einen Faktor von 1,1 bis 1,5, größer ist als das Volumen des Dichtrings.

Wie eingangs bereits angedeutet, kann erfindungsgemäß vorgesehen sein, dass das mechanische Stellglied als Komponente einer elektrisch ansteuerbaren Parkbremse ausgebildet ist. Derartige elektrisch ansteuerbare Parkbremsen kommen zunehmend im modernen Kraftfahrzeugbau zum Einsatz und bringen bei herkömmlicher Gestaltung der Dichtungsanordnung die eingangs geschilderte Problematik mit sich.

Die Erfindung wird im Folgenden beispielhaft anhand der beiliegenden Figuren erläutert. Es stellen dar:
- Figur 1: eine achsenthaltende Schnittansicht durch eine Scheibenbremse gemäß der vorliegenden Erfindung;
- Figur 2: den in Figur 1 mit II gekennzeichneten Bildausschnitt in vergrößerter Darstellung;
- Figur 3: die Ansicht gemäß Figur 2, wobei der Dichtring und der Betätigungskolben weggelassen wurde; und
- Figur 4: eine vergrößerte Ansicht des Profils der Ringnut gemäß Figur 3.

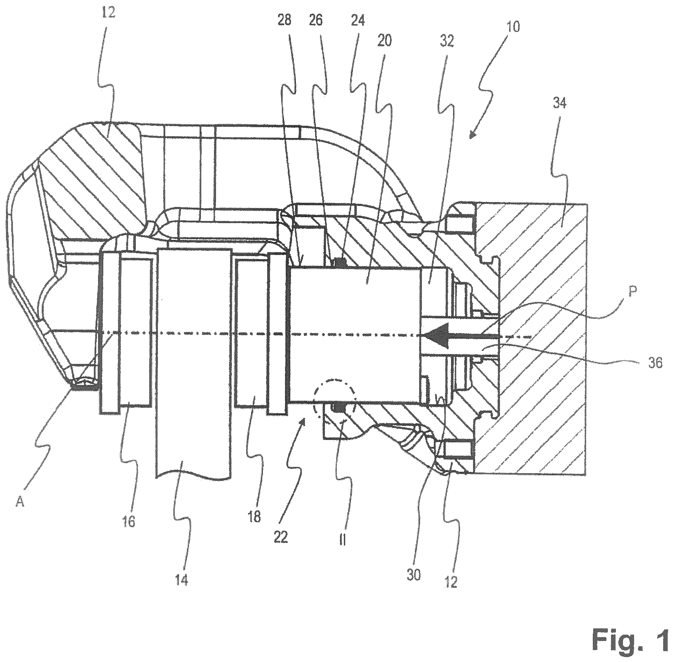

In Figur 1 ist eine erfindungsgemäße Scheibenbremse in einer achsenthaltenden Schnittansicht gezeigt und allgemein mit 10 bezeichnet. Diese ist in Form eines Bremssattels ausgebildet und umfasst ein Gehäuse 12, das in an sich bekannter Weise eine mit einem Kraftfahrzeugrad drehfest verbundene Bremsscheibe 14 überspannt. In dem Gehäuse 12 ist ein Bremsbelag 16 sowie ein weiterer Bremsbelag 18 gelagert. Der Bremsbelag 18 ist in dem Gehäuse 12 über einen entlang einer Kolbenlängsachse A gemäß dem Pfeil P verlagerbaren Betätigungskolben 20 verlagerbar.

Der Betätigungskolben 20 ist Teil einer Betätigungseinrichtung 22, die wahlweise hydraulisch oder elektromechanisch betätigt werden kann. Zur hydraulischen Betätigung ist vorgesehen, dass der Betätigungskolben 20 über einen Dichtring 24, der in einer Ringnut 26 aufgenommen ist, an seiner Außenumfangsfläche 28 dichtend in einer Kolbenaufnahmeöffnung 30 verlagerbar geführt ist. Die Kolbenaufnahmeöffnung 30 schließt zusammen mit dem Betätigungskolben 20 eine Hydraulikkammer 32 ein, die in an sich bekannter Weise mit Hydraulikfluid gefüllt und unter Druck gesetzt werden kann. In Folge der Druckbeaufschlagung verlagert sich der Betätigungskolben 20 in gewünschter Weise, sodass die Bremsbeläge 16 und 18 an die Bremsscheibe 14 angelegt werden können und deren Drehbewegung bremsen.

Zusätzlich zu dieser hydraulischen Betätigung ist auch eine mechanische Betätigung vorgesehen. Hierfür wird über eine nicht näher zu definierende elektromechanische Parkbremseinheit 34 ein Stellglied 36 verlagert, und über dieses - ohne Anlegen von Hydraulikdruck - der Betätigungskolben 20 entlang der Kolbenlängsachse A verlagert und so eine Zuspannwirkung auf die Bremsscheibe 14 erreicht.

Die Kombination aus hydraulischer und elektromechanischer Betätigung ist aus dem Stand der Technik bereits bekannt.

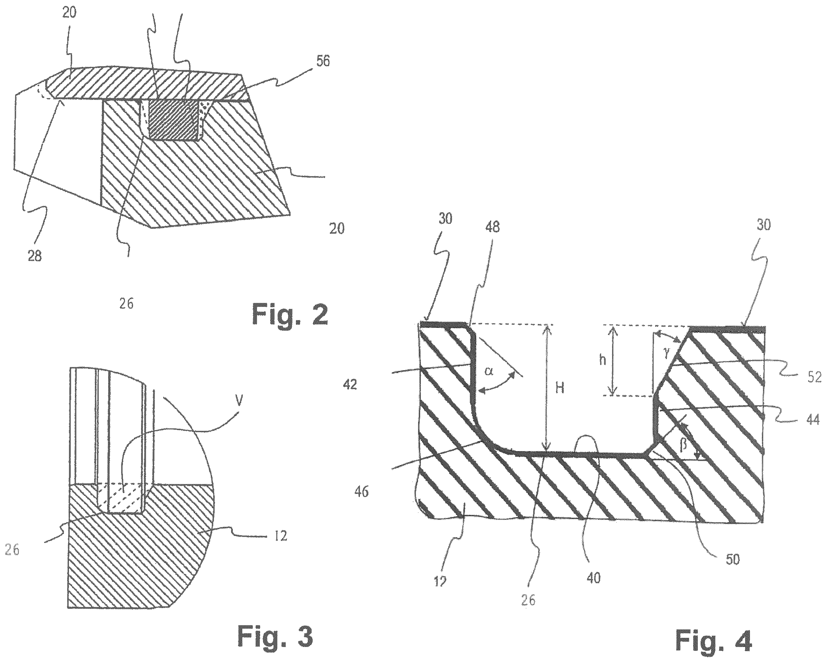

Im Folgenden soll im Detail auf die erfindungsgemäße Gestaltung der Abdichtung zwischen der Außenumfangsfläche 28 des Betätigungskolbens 20 und dem Gehäuse 12 eingegangen werden. Hierfür wird auf die Figuren 2 bis 4 verwiesen. In Figur 2 erkennt man den Bildausschnitt II aus Figur 1, wobei insbesondere erkennbar ist, dass der Dichtring 24 in der Ringnut 26 des Gehäuses 12 aufgenommen ist, und der Dichtring 24 mit seiner Innenumfangsfläche 38 in satter, dichtender Reibanlage mit der Außenumfangsfläche 28 des Betätigungskolbens 20 steht. Ferner erkennt man, dass die Ringnut 26 ein umlaufendes Ringvolumen V (siehe Schraffur in Figur 3) einschließt, das größer ist, als das Volumen des Dichtrings 24 (siehe Figur 2). Der Dichtring 24 ist also mit axialem Spiel in der Ringnut 26 aufgenommen. Das Volumenverhältnis des in der Ringnut 26 eingeschlossenen Volumens V relativ zum Volumen des Dichtrings 24 liegt im Bereich zwischen 1,1 und 1,5.

Figur 4 zeigt in vergrößerter Darstellung die Profilkontur der Ringnut 26 im Detail. Diese weist einen Nutgrund 40 auf, der im Wesentlichen parallel zur Kolbenlängsachse A verläuft und eine umlaufende Ringfläche im Gehäuse 12 vorsieht. Der Nutgrund 40 wird von einer ersten Nutwand 42, die auf der der Hydraulikkammer abgewandten Seite der Ringnut 26 angeordnet ist, und einer zweiten Nutwand 44 begrenzt (in Figur 4 auf der rechten Seite), die auf der der Hydraulikkammer 32 zugewandten Seite der Ringnut 26 angeordnet ist, wenn man als Bezugsrichtung die Richtung der Kolbenlängsachse A heranzieht.

Zwischen dem Nutgrund 40 und der ersten Nutwand 42 ist ein Übergangsbereich 46 vorgesehen, der im Wesentlichen kreisbogenförmig gerundet geformt ist und tangential in die Nutwand 42 bzw. den Nutgrund 40 übergeht. Die Nutwand 42 geht über eine Fase 48 in die die Kolbenaufnahmeöffnung definierende Innenumfangsfläche 30 über. Der Fasenwinkel α beträgt etwa 45°.

Der Nutgrund 40 geht über eine Übergangsfläche 50 in die zweite Nutwand 44 über. Die Übergangsfläche 50 verläuft in einem Winkel β von 45° relativ zum Nutgrund 40. Die zweite Nutwand 44 ist in ihrem radial inneren Bereich angeschrägt, wobei der maßgebliche Winkel γ im Beispielsfall 30° beträgt. Daraus ergibt sich ein Flächenabschnitt 52, über den die zweite Nutwand 44 in die Innenumfangsfläche 30 der Kolbenaufnahmeöffnung übergeht. Die Höhe h, über die sich die Übergangsfläche erstreckt, beträgt im Beispielsfall etwas mehr als 50 % der Höhe H mit der sich die Ringnut 26 radial in das Gehäuse 12 hineinerstreckt.

Ferner sei angemerkt, dass der Dichtring 24 mit radialem Übermaß in der Ringnut 26 aufgenommen ist.

Im Folgenden soll auf die Funktionsweise eingegangen werden.

Aufgrund der Dimensionierung der Ringnut 26 und des eingesetzten Dichtrings 24 liegt der Dichtring 24 mit seiner Innenumfangsfläche 38 satt und unter wesentlichen Radialkräften auf der Außenumfangsfläche 28 des Betätigungskolbens 20 dichtend an. Wird nun in Folge einer Erhöhung des Hydraulikdrucks in der Hydraulickammer 32 zur Aktivierung der Betriebsbremse der Betätigungskolben 20 in Richtung der Kolbenlängsachse A verlagert, so ist üblicherweise - lässt man Verschleißausgleichseffekte der Bremsbeläge außer Acht - nur eine relativ geringe Kolbenbewegung erforderlich, um eine Bremswirkung zu erzielen. Dies ist in Figur 2 durch Strichlinien angedeutet. Bei einer derartigen Bewegung verformt sich der Dichtring 24 elastisch etwa zu einem Parallelogramm. Auch dies ist in Figur 2 durch Strichlinien angedeutet. Dabei kommt es in der Regel jedoch nicht dazu, dass die Haftreibung zwischen Dichtelement 24 und Außenumfangsfläche 28 des Betätigungskolbens 20 überwunden wird. Diese elastische Verformung wird durch den Hydraulikdruck unterstützt, der sich in Figur 2 in dem mit Punkten versehenen Volumenbereich 56 auf der rechten Seite des Dichtrings 24 innerhalb der Ringnut 26 ausbildet. Wird der Hydraulikdruck wieder freigegeben, so kann sich der Dichtring elastisch in seine Ausgangsstellung zurückverformen und nimmt dabei den Betätigungskolben 20 wieder in seine Ausgangsstellung zurück, wodurch Restschleifmomente vermieden werden können.

Kommt es nun aber in Folge einer Aktivierung der Parkbremseinrichtung 34 zu einer Verlagerung des Betätigungskolbens, ohne dass der Hydraulikdruck in der Hydraulikkammer 32 maßgeblich verändert wird, insbesondere ohne dass dieser entsprechend eines Betriebsbremsvorgangs deutlich erhöht wird, so wird in Folge der Verlagerung des Betätigungskolbens 20 der Dichtring 24 aufgrund der Haftreibung zwischen der Innenumfangsfläche 38 und der Außenumfangsfläche 28 mitgenommen. Auf diese Weise gelangt der Dichtring 24 in den gerundet ausgebildeten Übergangsbereich 46 und wird entsprechend radial einwärts deformiert. Dadurch wird der Dichtring im entsprechenden Flächenbereich auf die Außenumfangsfläche 28 des Betätigungskolbens 20 gedrückt, wodurch sich die Haftreibung erhöht. Dies erschwert es, dass der Betätigungskolben 20 die Haftreibungskräfte überwindet und durch den Dichtring hindurchrutscht. Vielmehr wird dadurch unterstützt, dass der Dichtring stärker an Ort und Stelle auf der Außenumfangsfläche des Betätigungskolbens 20 haften bleibt und der Dichtring so seine Rückstellwirkung beibehalten kann. Kommt es aber dennoch zu einem Durchrutschen des Betätigungskolbens 20 durch den Dichtring 24, also zu einer an sich unerwünschten Relativverlagerung, so wird der Dichtring 24 bei einer folgenden Betriebsbremsung durch die hydraulische Wirkung des Bremsfluids im Volumenbereich 56 derart stark deformiert, dass er seine Rückstellwirkung über den Übergangsbereich 46 und die daraus resultierende Deformation schnell zurückgewinnt, sodass er auf dem Betätigungskolben 20 wieder in seine gewünschte Ausgangsstellung verlagert wird und sich zur Vermeidung von Restschleifmomenten elastisch entspannen und den Betätigungskolben zurückziehen kann.

Es stellt sich also aufgrund der gewählten Profilierung eine Art Regenerationseffekt des Dichtsystems ein, der dazu genutzt wird, dass bei einer auf eine Aktivierung der elektrischen Parkbremse folgenden Betriebsbremsung eine gezielte Deformation des Dichtrings innerhalb der Ringnut stattfindet, wodurch sich der Dichtring 24 auf dem Betätigungskolben 20 in seiner gewünschten Ausgangsstellung positionieren kann. Dadurch ist der gewünschte Rückstelleffekt des Dichtrings 24 gewährleistet.

Die Erfindung bietet somit eine kostengünstig herstellbare und einfache Möglichkeit, die eingangs beschriebene Problematik bei einem Wechselspiel zwischen einer Betriebsbremsung und einer Betätigung der elektrischen Parkbremse zu berücksichtigen und bei einem unerwünschten Verrutschen des Dichtrings auf der Außenumfangsfläche des Betätigungskolbens in Folge einer Betätigung der elektrischen Parkbremse durch schnelle Repositionierung entgegen zu wirken.

## Patentansprüche

1. Scheibenbremse (10) für ein Kraftfahrzeug,
wobei die Scheibenbremse (10) ein Gehäuse (12), eine relativ zum Gehäuse (12) drehbare Bremsscheibe (14), wenigstens einen Reibbelag (16, 18), sowie wenigstens eine Betätigungseinrichtung (22) umfasst, die dazu ausgebildet ist, eine Relativbewegung zwischen der Bremsscheibe (14) und dem Reibbelag (16, 18) zu bewirken, so dass der Reibbelag (16, 18) in Anlage mit der Bremsscheibe (14) bringbar ist, wobei die Betätigungseinrichtung (22) wenigstens einen entlang einer Kolbenlängsachse (A) verlagerbaren Betätigungskolben (20) aufweist, der in dem Gehäuse (12) über eine Dichtungsanordnung mit einem Dichtring (24) hydraulisch dichtend verlagerbar geführt ist, wobei der Betätigungskolben (20) in dem Gehäuse (12) sowohl durch hydraulische Druckbeaufschlagung einer in dem Gehäuse (12) ausgebildeten Hydraulikkammer (32) als auch über ein mechanisches Stellglied (36) verlagerbar ist, wobei der Dichtring (24) in einer in dem Gehäuse (12) ausgebildeten Ringnut (26) aufgenommen ist,
**dadurch gekennzeichnet, dass** die Ringnut (26) einen im Wesentlichen parallel zur Kolbenlängsachse verlaufenden Nutgrund (40) sowie zwei an den Nutgrund (40) anschließende Nutwände (42, 44) aufweist, wobei - in Richtung der Kolbenlängsachse (A) betrachtet - eine erste Nutwand (42) von der Hydraulikkammer (32) abgewandt ist und eine zweite Nutwand (44) der Hydraulikkammer (32) zugewandt ist, wobei die erste Nutwand (42) über einen gerundeten oder angeschrägten Übergangsbereich (46) mit sich veränderndem Abstand zur Kolbenlängsachse (A) in den Nutgrund (40) übergeht, wobei der Dichtring (24) mit axialem Spiel in der Ringnut (26) aufgenommen ist, wobei das Volumen (V) des von der Ringnut (26) umschlossenen Hohlraums größer ist als das Volumen des Dichtrings.

2. Scheibenbremse (10) nach Anspruch 1,
**dadurch gekennzeichnet, dass** der Übergangsbereich (46) in einem achsenthaltenden Schnitt betrachtet ein im Wesentlichen kreisbogenförmiges Profil aufweist.

3. Scheibenbremse (10) nach Anspruch 2,
**dadurch gekennzeichnet, dass** der Radius des kreisbogenförmigen Profils im Bereich zwischen 0,5 und 2 mm liegt.

4. Scheibenbremse (10) nach Anspruch 1,
**dadurch gekennzeichnet, dass** der Übergangsbereich als schräg verlaufende Übergangsfläche ausgebildet ist, die sich relativ zum Nutgrund (40) in einem Winkel zwischen 35 und 55° erstreckt.

5. Scheibenbremse (10) nach einem der vorangehenden Ansprüche,
**dadurch gekennzeichnet, dass** die erste Nutwand (42) oder/und die zweite Nutwand (44) radial innerhalb des Übergangsbereichs (46) im Wesentlichen senkrecht zur Kolbenlängsachse (A) verläuft.

6. Scheibenbremse (10) nach einem der vorangehenden Ansprüche,
**dadurch gekennzeichnet, dass** die zweite Nutwand (44) in ihrem radial inneren Bereich in einem Flächenabschnitt (52) ausläuft, der von dem senkrechten Verlauf zu Kolbenlängsachse (A) abweicht.

7. Scheibenbremse (10) nach Anspruch 6,
**dadurch gekennzeichnet, dass** der Flächenabschnitt (52) von einer Schräge gebildet ist, die mit der zweiten Nutwand einen Winkel (γ) zwischen 15° und 45° einschließt.

8. Scheibenbremse (10) nach Anspruch 6 oder 7,
**dadurch gekennzeichnet, dass** sich der Flächenabschnitt (52) über einen Bereich von 30 % bis 70 % der radialen Höhe der Ringnut (26) erstreckt.

9. Scheibenbremse (10) nach einem der vorangehenden Ansprüche,
**dadurch gekennzeichnet, dass** zwischen dem Nutgrund (40) und der zweiten Nutwand (44) eine Übergangsfläche (50) vorgesehen ist.

10. Scheibenbremse (10) nach Anspruch 9,
**dadurch gekennzeichnet, dass** die Übergangsfläche (50) als Schräge ausgebildet ist, die in einem Winkel von 30° bis 50° relativ zur Nutgrund (40) verläuft.

11. Scheibenbremse (10) nach einem der vorangehenden Ansprüche,
**dadurch gekennzeichnet, dass** der Dichtring (24) mit einem größeren Außendurchmesser ausgebildet ist, als der Innendurchmesser der Ringnut (26), wobei vorzugsweise der Außendurchmesser des Dichtrings (24) mit einem radialen Übermaß von 0,5 - 1,2 mm, vorzugsweise von 0,8 mm gegenüber dem Innendurchmesser der Ringnut (26) ausgebildet ist.

12. Scheibenbremse (10) nach einem der vorangehenden Ansprüche,
**dadurch gekennzeichnet, dass** das Volumen (V) des von der Ringnut (26) umschlossenen Hohlraums um einen Faktor von 1,1 bis 1,5 größer ist als das Volumen des Dichtrings.

13. Scheibenbremse (10) nach einem der vorangehenden Ansprüche,
**dadurch gekennzeichnet, dass** das mechanische Stellglied (34, 36) als Komponente einer elektrisch ansteuerbaren Parkbremse ausgebildet ist.

## Claims

1. Disc brake (10) for an automotive vehicle,
wherein the disc brake (10) comprises a housing (12), a brake disc (14) rotatable relative to the housing (12), at least one friction pad (16, 18), and at least one actuation device (22), which is formed to effect a relative movement between the brake disc (14) and the friction pad (16, 18), such that the friction pad (16, 18) can be brought into contact with the brake disc (14), wherein the actuation device (22) has at least one actuating piston (20) movable along a piston longitudinal axis (A), which actuating piston is guided such that it is movable in a hydraulically sealing manner within the housing (12) by means of a sealing arrangement having a sealing ring (24), wherein the actuating piston (20) is movable within the housing (12) both by means of applying a hydraulic pressure of a hydraulic chamber (32) provided within the housing (12) and by means of a mechanical actuator (36), wherein the sealing ring (24) is taken up in an annular groove (26) formed in the housing (12),
**characterized in that** the annular groove (26) comprises a groove floor (40) extending substantially parallel to the piston longitudinal axis and also two groove walls (42, 44) adjacent to the groove floor (40), wherein - as viewed in the direction of the piston longitudinal axis (A) - a first groove wall (42) is directed away from the hydraulic chamber (32) and a second groove wall (44) is directed towards the hydraulic chamber (32), wherein the first groove wall (42) merges via a rounded or bevelled transition area (46) with a varying distance to the piston longitudinal axis (A) into the groove floor (40), wherein the sealing ring (24) is taken up in the annular groove (26) with axial play, wherein the volume (V) of the cavity enclosed by the annular groove (26) is greater than the volume of the sealing ring.

2. Disc brake (10) according to Claim 1,
**characterized in that** the transition area (46) has a profile that is substantially in the shape of a circular arc as viewed in a section containing the axis.

3. Disc brake (10) according to Claim 2,
**characterized in that** the radius of the profile that is in the shape of a circular arc is in the range between 0.5 and 2 mm.

4. Disc brake (10) according to Claim 1,
**characterized in that** the transition area is formed as an oblique transition surface, which extends at an angle of between 35 and 55° relative to the groove floor (40).

5. Disc brake (10) according to one of the preceding claims,
**characterized in that** the first groove wall (42) or/and the second groove wall (44) runs radially within the transition area (46) substantially perpendicular to the piston longitudinal axis (A).

6. Disc brake (10) according to one of the preceding claims,
**characterized in that** the second groove wall (44) runs out in its radially inner area in a surface section (52), which deviates from the perpendicular progression to piston longitudinal axis (A).

7. Disc brake (10) according to Claim 6,
**characterized in that** the surface section (52) is formed by a bevel, which encloses an angle (γ) of between 15° and 45° with the second groove wall.

8. Disc brake (10) according to Claim 6 or 7,
**characterized in that** the surface section (52) extends over an area of 30% to 70% of the radial height of the annular groove (26).

9. Disc brake (10) according to one of the preceding claims,
**characterized in that** a transition surface (50) is provided between the groove floor (40) and the second groove wall (44).

10. Disc brake (10) according to Claim 9,
**characterized in that** the transition surface (50) is formed as a bevel, which runs at an angle of 30° to 50° relative to the groove floor (40).

11. Disc brake (10) according to one of the preceding claims,
**characterized in that** the sealing ring (24) is formed with a larger outer diameter than the inner diameter of the annular groove (26), wherein the outer diameter of the sealing ring (24) is preferably formed with a radial oversize of 0.5-1.2 mm, preferably of 0.8 mm, relative to the inner diameter of the annular groove (26).

12. Disc brake (10) according to one of the preceding claims,
**characterized in that** the volume (V) of the cavity enclosed by the annular groove (26) is greater than the volume of the sealing ring by a factor of 1.1 to 1.5.

13. Disc brake (10) according to one of the preceding claims,
**characterized in that** the mechanical actuator (34, 36) is formed as a component of an electrically activatable parking brake.

## Revendications

1. Frein à disque (10) pour un véhicule automobile,
le frein à disque (10) comprenant un boîtier (12), un disque de frein (14) pouvant tourner par rapport au boîtier (12), au moins une garniture de friction (16, 18), ainsi qu'au moins un dispositif d'actionnement (22) qui est réalisé pour provoquer un mouvement relatif entre le disque de frein (14) et la garniture de friction (16, 18), de telle sorte que la garniture de friction (16, 18) peut être amenée en application avec le disque de frein (14), le dispositif d'actionnement (22) présentant au moins un piston d'actionnement (20) déplaçable le long d'un axe longitudinal de piston (A), qui est guidé dans le boîtier (12) de manière à pouvoir être déplacé de manière hydrauliquement étanche par l'intermédiaire d'un agencement d'étanchéité comportant une bague d'étanchéité (24), le piston d'actionnement (20) pouvant être déplacé dans le boîtier (12) aussi bien par sollicitation en pression hydraulique d'une chambre hydraulique (32) réalisée dans le boîtier (12) que par l'intermédiaire d'un organe de réglage mécanique (36), la bague d'étanchéité (24) étant reçue dans une rainure annulaire (26) réalisée dans le boîtier (12),
**caractérisé en ce que** la rainure annulaire (26) présente un fond de rainure (40) s'étendant essentiellement parallèlement à l'axe longitudinal de piston ainsi que deux parois de rainure (42, 44) se raccordant au fond de rainure (40), une première paroi de rainure (42) - considérée en direction de l'axe longitudinal de piston (A) - étant détournée de la chambre hydraulique (32) et une deuxième paroi de rainure (44) étant tournée vers la chambre hydraulique (32), la première paroi de rainure (42) se poursuivant par le fond de rainure (40) par l'intermédiaire d'une zone de transition (46) arrondie ou chanfreinée dont la distance par rapport à l'axe longitudinal de piston (A) varie, la bague d'étanchéité (24) étant reçue avec un jeu axial dans la rainure annulaire (26), le volume (V) de la cavité entourée par la rainure annulaire (26) étant plus grand que le volume de la bague d'étanchéité.

2. Frein à disque (10) selon la revendication 1,
**caractérisé en ce que** la zone de transition (46) présente un profil essentiellement en forme d'arc de cercle lorsqu'elle est considérée dans une coupe à axe constant.

3. Frein à disque (10) selon la revendication 2,
**caractérisé en ce que** le rayon du profil en forme d'arc de cercle se situe dans la plage comprise entre 0,5 et 2 mm.

4. Frein à disque (10) selon la revendication 1,
**caractérisé en ce que** la zone de transition est réalisée sous forme de surface de transition inclinée qui s'étend selon un angle compris entre 35 et 55° par rapport au fond de rainure (40).

5. Frein à disque (10) selon l'une quelconque des revendications précédentes,
**caractérisé en ce que** la première paroi de rainure (42) ou/et la deuxième paroi de rainure (44) s'étendent radialement à l'intérieur de la zone de transition (46) essentiellement perpendiculairement à l'axe longitudinal de piston (A).

6. Frein à disque (10) selon l'une quelconque des revendications précédentes,
**caractérisé en ce que** la deuxième paroi de rainure (44) se termine dans sa zone radialement intérieure par une section de surface (52) qui s'écarte du tracé perpendiculaire à l'axe longitudinal de piston (A).

7. Frein à disque (10) selon la revendication 6,
**caractérisé en ce que** la section de surface (52) est formée par un biais qui forme un angle (γ) compris entre 15° et 45° avec la deuxième paroi de rainure.

8. Frein à disque (10) selon la revendication 6 ou 7,
**caractérisé en ce que** la section de surface (52) s'étend sur une plage de 30 % à 70 % de la hauteur radiale de la rainure annulaire (26).

9. Frein à disque (10) selon l'une quelconque des revendications précédentes,
**caractérisé en ce qu'**une surface de transition (50) est prévue entre le fond de rainure (40) et la deuxième paroi de rainure (44).

10. Frein à disque (10) selon la revendication 9,
**caractérisé en ce que** la surface de transition (50) est réalisée sous forme de biais qui s'étend selon un angle de 30° à 50° par rapport au fond de rainure (40).

11. Frein à disque (10) selon l'une quelconque des revendications précédentes,
**caractérisé en ce que** la bague d'étanchéité (24) est réalisée avec un diamètre extérieur plus grand que le diamètre intérieur de la rainure annulaire (26), le diamètre extérieur de la bague d'étanchéité (24) étant de préférence réalisé avec une surdimension radiale de 0,5 à 1,2 mm, de préférence de 0,8 mm par rapport au diamètre intérieur de la rainure annulaire (26).

12. Frein à disque (10) selon l'une quelconque des revendications précédentes,
**caractérisé en ce que** le volume (V) de la cavité entourée par la rainure annulaire (26) est plus grand que le volume de la bague d'étanchéité, d'un facteur de 1,1 à 1,5.

13. Frein à disque (10) selon l'une quelconque des revendications précédentes,
**caractérisé en ce que** l'organe de réglage mécanique (34, 36) est réalisé sous forme de composant d'un frein de stationnement à commande électrique.
